# EUROPEAN PATENT SPECIFICATION

(11) **EP 3 597 607 B1**
(45) Date of publication and mention of the grant of the patent: **08.01.2025**
(21) Application number: 18768636.5
(22) Date of filing: 08.03.2018
(51) Int. Cl.: C02F 1/50, B63B 15/00, C02F 1/70, C02F 1/76, C02F 1/66, B63J 4/00, C02F 103/00

(54) **BALLAST WATER TREATMENT DEVICE AND BALLAST WATER TREATMENT METHOD**
BALLASTWASSERBEARBEITUNGSVORRICHTUNG UND BALLASTWASSERBEARBEITUNGSVERFAHREN
DISPOSITIF ET PROCÉDÉ DE TRAITEMENT D'EAU DE BALLAST

(30) Priority: 13.03.2017 JP 2017047175
(43) Date of publication of application: 22.01.2020
(73) Proprietor: SHIKOKU CHEMICALS CORPORATION, Marugame-shi, Kagawa 7638504 (JP)
(72) Inventor: YAMAMOTO, Koji, Osaka-shi Osaka 530-8611 (JP); YAMAMOTO, Mitsuaki, Osaka-shi Osaka 530-8611 (JP); MATSUDA, Takeshi, Osaka-shi Osaka 530-8611 (JP)
(74) Representative: Vossius & Partner Patentanwälte Rechtsanwälte mbB
(86) International application number: PCT/JP2018/009102
(87) International publication number: WO 2018/168665

(56) References cited:
- WO-A1-2017/033848
- JP-A- 2012 254 402
- JP-A- 2013 046 892
- JP-A- 2013 046 892
- JP-A- 2013 075 250
- JP-A- 2015 016 761
- JP-A- 2015 160 468
- JP-A- 2017 042 710
- JP-A- S4 730 518
- KR-A- 20140 001 564
- US-A1- 2010 224 571

## Description

### Technical Field

The present invention relates to a ballast water treatment device and a ballast water treatment method.

### Background Art

Conventionally, for stabilizing a ship such as a cargo ship in a state where a cargo is not loaded on the ship, there has been known a measure where a ballast tank disposed in the ship is filled with sea water as ballast water. A large number of microorganisms, bacteria and the like live in sea water used as such ballast water. Accordingly, at the time of discharging ballast water from the ship which goes back and forth between foreign countries, it is necessary to perform sterilization of ballast water for preventing microorganisms and bacteria from affecting an ecosystem of an ocean.

As one example of a method for sterilizing ballast water, for example, the following Patent Literature 1 discloses a ballast water treatment device which sterilizes sea water pumped up from the outside of a ship. The ballast water treatment device includes a chemical tank in which a chemical aqueous solution is stored and a sterilizing agent pipe through which the chemical aqueous solution is injected into a ballast pipe connected to a ballast tank. In such a ballast water treatment device, the chemical aqueous solution held in the chemical tank is injected into the ballast pipe through the sterilizing agent pipe. Then, the chemical aqueous solution injected into the ballast pipe is supplied to the ballast tank together with ballast water which flows through the ballast pipe.

In the ballast water treatment device disclosed in the following Patent Literature 1, the chemical aqueous solution having relatively high concentration is injected into the ballast pipe. Accordingly, the chemical aqueous solution is not sufficiently mixed into ballast water which flows through the ballast pipe, thus giving rise to a case where the concentration of the chemical becomes non-uniform in ballast water. Further, in the configuration of the ballast water treatment device disclosed in Patent Literature 1, for uniformly diluting the chemical aqueous solution in ballast water which flows through the ballast pipe, it is necessary to install a mixer having a complicated shape and having a large pressure loss. Particularly, in the case where a static mixer is used as the mixer, it is necessary to ensure a long mixing distance. Further, in the case where a chlorine-based chemical is used as the above-mentioned chemical, the chlorine-based chemical with high concentration is directly supplied to the ballast pipe, so that there arises a concern that the ballast pipe corrodes due to an action of the chlorine-based chemical. Patent Literature 2 discloses a ballast water treatment system comprising a sterilizing solution supply device provided in the ballast pipe and a reducing agent supply mechanism provided in the discharging line.

### Citation List

### Patent Literature

Patent Literature 1: JP 5924447 B1; Patent Literature 2: JP 2013 046892 A

### Summary of Invention

It is an object of the present invention to provide a ballast water treatment device and a ballast water treatment method as defined in the independent claims which can make the concentration of a chemical in ballast water which flows through a ballast pipe more uniform. With the use of such a ballast water treatment device, it is possible to eliminate the use of a large-scale mixer for uniformly diluting a chemical aqueous solution. Further, in the case where a chlorine-based chemical is used as the chemical, it is also possible to reduce a concern that the ballast pipe corrodes due to an action of the chlorine-based chemical.

### Brief Description of Drawings

FIG. 1 is a schematic view showing the configuration of a ballast water treatment device according to an embodiment of the present invention.
FIG. 2 is a table collectively showing operation states of various pumps and open/close states of the various valves, used in the ballast water treatment device according to the embodiment.
FIG. 3 is a schematic view showing a state where a water filling operation is performed in the ballast water treatment device according to the embodiment.
FIG. 4 is a schematic view showing a state where a sterilizing agent discharging operation is performed in the ballast water treatment device according to the embodiment.
FIG. 5 is a schematic view showing a state where a water discharging operation is performed in the ballast water treatment device according to the embodiment.
FIG. 6 is a schematic view showing a state where a neutralizing agent discharging operation is performed in the ballast water treatment device according to the embodiment.
FIG. 7 is a schematic view showing a state where a cleaning operation is performed in the ballast water treatment device according to the embodiment.
FIG. 8 is a schematic view showing a modification of the configuration of the ballast water treatment device according to the embodiment.

### Description of Embodiments

### [Ballast water treatment device]

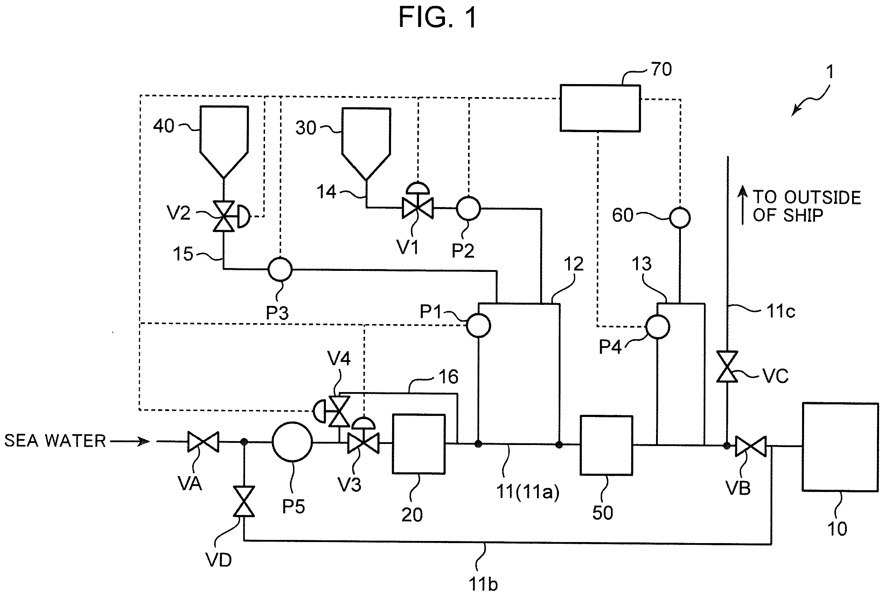

The configuration of a ballast water treatment device 1 according to an embodiment of the present invention will be described with reference to FIG. 1. FIG. 1 is a schematic view showing the configuration of the ballast water treatment device according to the embodiment. As shown in FIG. 1, a ballast water treatment device 1 according to the invention is a device for supplying a chemical (for example, a sterilizing agent or a neutralizing agent) that is properly diluted to the ballast pipe 11, which is connected to a ballast tank 10, by way of a bypass pipe 12. The ballast water treatment device 1 of the embodiment depicted in figure 1 mainly includes the bypass pipe 12, a measurement bypass pipe 13, a sterilization pipe 14, a neutralization pipe 15, a roundabout bypass pipe 16, a sterilizing agent holding part 30, a neutralizing agent holding part 40, a mixer 50, a concentration measuring part 60 and a controller 70. In this embodiment, "sterilization pipe 14" and the "neutralization pipe 15" correspond to "chemical pipe", and "sterilizing agent holding part 30" and "neutralizing agent holding part 40" correspond to "chemical holding part".

The ballast pipe 11 has a ballast main pipe 11a connected to the ballast tank 10, a return pipe 1 1b for returning ballast water stored in the ballast tank 10 to an upstream side of the ballast main pipe 11a and a discard pipe 11c for discharging ballast water to the outside of a ship. With the use of these respective pipes, a supply path through which sea water pumped into the ship is introduced into the ballast tank 10, and a discharge path through which ballast water stored in the ballast tank 10 is discharged to the outside of the ship are formed. Hereinafter, untreated water (sea water) after being taken into the ballast pipe 11 is referred to as "ballast water".

It is necessary that the inside of the ballast pipe 11 is formed using a material which is minimally corroded by a sterilizing agent or a neutralizing agent. For this purpose, it is preferable that the ballast pipe 11 be a carbon steel pipe having a lining made of a polyvinyl chloride resin, a polyethylene resin, an epoxy resin, or a fluorocarbon resin, a titanium pipe, or a stainless steel pipe. It is more preferable that the ballast pipe 11 be a carbon steel pipe having a lining made of an epoxy resin.

The ballast main pipe 11a has one pipe port through which ballast water flows into the ballast main pipe 11a and the other pipe port connected to the ballast tank 10. Ballast water flows into the ballast main pipe 11a from one pipe port of the ballast main pipe 11a, and flows through the ballast main pipe 11a toward the other pipe port. With such a configuration, ballast water is introduced into the ballast tank 10, and is stored in the ballast tank 10 for stabilizing a hull. The ballast main pipe 11a is provided with a manually operated valve VA, a ballast pump P5, a valve V3, a filter device 20, a mixer 50 and a manually operated valve VB in this order. To the ballast main pipe 11a, the roundabout bypass pipe 16, the bypass pipe 12, the measurement bypass pipe 13, the return pipe 11b and the discard pipe 11c are respectively connected.

Both the manually operated valve VA and the manually operated valve VB can be manually opened and closed. By opening the manually operated valve VA, sea water outside the ship can be taken into the ballast main pipe 11a. On the other hand, by closing the manually operated valve VA, it is possible to prevent ballast water flowing through the return pipe 11b from being discharged to the outside of the ship. By opening the manually operated valve VB, ballast water flowing through the ballast main pipe 11a can be supplied to the ballast tank 10. On the other hand, by closing the manually operated valve VB, ballast water flowing through the ballast main pipe 11a can be introduced into the discard pipe 11c.

The return pipe 11b is used at the time of discharging ballast water stored in the ballast tank 10 to the outside of the ship. One end of the return pipe 11b is connected to the ballast main pipe 11a on a downstream side of the manually operated valve VB in the flow direction of ballast water. The other end of the return pipe 11b is connected to the ballast main pipe 11a on an upstream side of the ballast pump P5 in the flow direction of ballast water. Ballast water in the ballast tank 10 is returned through the return pipe 1 1b to the ballast main pipe 11a on the upstream side of the ballast pump P5.

A manually operated valve VD is provided on the return pipe 11b. By opening the manually operated valve VD, ballast water stored in the ballast tank 10 is returned through the return pipe 11b to an upstream side of the ballast main pipe 11a. On the other hand, by closing the manually operated valve VD, there is no possibility that ballast water flowing through the ballast main pipe 11a is returned through the return pipe 11 b to the upstream side of the ballast main pipe 11a.

The discard pipe 11c forms a flow path through which ballast water stored in the ballast tank 10 is discharged to the outside of the ship. One end of the discard pipe 11c is connected to the ballast main pipe 11a on a downstream side of the measurement bypass pipe 13. The other end of the discard pipe 11c forms a path communicated with the outside of the ship. Ballast water in the ballast tank 10 is discharged to the outside of the ship through the discard pipe 11c.

A manually operated valve VC is provided on the discard pipe 11c. By opening the manually operated valve VC, ballast water flowing through the ballast main pipe 11a can be discharged to the outside of the ship through the discard pipe 11c. On the other hand, by closing the manually operated valve VC, it is possible to prevent ballast water flowing through the ballast main pipe 11a from being discharged to the outside of the ship.

The ballast pump P5 is provided for taking ballast water into the ballast main pipe 11a. The ballast pump P5 is disposed on a one pipe port side of the ballast main pipe 11a. The ballast pump P5 imparts a predetermined suction pressure to ballast water flowing through the ballast main pipe 11a such that ballast water flows toward the ballast tank 10.

The filter device 20 is provided for removing, by filtering, relatively large foreign substances and relatively large microorganisms or the like contained in ballast water. The filter device 20 is disposed on the ballast main pipe 11a on a downstream side of the ballast pump P5 in the flow direction of ballast water (on a ballast tank 10 side) and an upstream side of a connecting portion between the ballast main pipe 11a and the bypass pipe 12. The filter device 20 may be disposed on an upstream side of the ballast pump P5. Since relatively large microorganisms and foreign substances are removed from ballast water after the ballast water passes the filter device 20, it is possible to efficiently apply a chemical to relatively small microorganisms. FIG. 1 shows the case where the valve V3 is disposed upstream of the filter device 20. However, there may be the case where the valve V3 is incorporated in the filter device 20.

The roundabout bypass pipe 16 is provided for allowing ballast water stored in the ballast tank 10 to round about the filter device 20 at the time of discharging ballast water to the outside of the ship. As shown in FIG. 1, both ends of the roundabout bypass pipe 16 are connected to the ballast main pipe 11a such that the roundabout bypass pipe 16 rounds about the filter device 20. More specifically, one end portion of the roundabout bypass pipe 16 is connected to a part of the ballast main pipe 11a, which is positioned downstream of the ballast pump P5 and upstream of the filter device 20. The other end portion of the roundabout bypass pipe 16 is connected to a part of the ballast main pipe 11a, which is positioned downstream of the filter device 20 and upstream of the mixer 50 and the connecting portion between the ballast main pipe 11a and the bypass pipe 12. A valve V4 is mounted on the roundabout bypass pipe 16.

At the time of discharging ballast water stored in the ballast tank 10 to the outside of the ship, the valve V3 mounted on the ballast main pipe 11a is closed, and the valve V4 is opened. With such an operation, ballast water flowing through the ballast main pipe 11a flows through the roundabout bypass pipe 16 such that ballast water rounds about the filter device 20, and accordingly, a flow speed of ballast water flowing through the ballast main pipe 11a can be increased. As a result, ballast water can be discharged to the outside of the ship more promptly. Meanwhile, at the time of filling the ballast tank 10 with ballast water, the valve V4 mounted on the roundabout bypass pipe 16 is closed, and the valve V3 is opened. With such an operation, there is no possibility that ballast water taken in to the ship flows through the roundabout bypass pipe 16, and hence, ballast water can reliably pass through the filter device 20.

The bypass pipe 12 is provided for supplying a chemical to ballast water flowing through the ballast main pipe 11a. As shown in FIG. 1, the bypass pipe 12 is used in a state where both ends of the bypass pipe 12 are connected to the ballast main pipe 11a on a downstream side of the roundabout bypass pipe 16. In this specification, "chemical" in this embodiment means both a sterilizing agent and a neutralizing agent that neutralizes a sterilizing action of the sterilizing agent. Since the bypass pipe 12 is connected to the ballast main pipe 11a, a flow path is formed where a part of ballast water flowing through the ballast main pipe 11a is divided from ballast water flowing through the ballast main pipe 11a, and thereafter is merged with ballast water flowing through the ballast main pipe 11a. A bypass pump P1 is provided on the bypass pipe 12 for taking ballast water into the bypass pipe 12. A neutralization pipe 15 for supplying a neutralizing agent and the sterilization pipe 14 for supplying a sterilizing agent are connected to the bypass pipe 12 in this order. The sterilizing agent and the neutralizing agent supplied from these pipes are respectively returned to the ballast main pipe 11a after being diluted by ballast water flowing through the bypass pipe 12.

Through the bypass pipe 12, ballast water containing a sterilizing agent or a neutralizing agent having high concentration compared to ballast water flowing through the ballast pipe 11 flows. Accordingly, the inner surface of the bypass pipe 12 is formed using a material having more excellent corrosion resistance than a material used for forming an inner surface of the ballast pipe 11. As a material used for forming the inner surface of the bypass pipe 12, one or more kinds selected from the group consisting of titanium, a polyvinyl chloride resin, a polyethylene resin and a fluorocarbon resin are used. As such a bypass pipe 12, it is preferable to use a carbon steel pipe having a lining made of a polyvinyl chloride resin, a polyethylene resin or a fluorocarbon resin, a titanium pipe or a polyvinyl chloride pipe. It is particularly preferable to use a carbon steel pipe having a lining made of a polyethylene resin. With the use of the bypass pipe 12 made of such a material, corrosion of the bypass pipe 12 can be suppressed, and accordingly, safety of the ballast water treatment device can be increased.

An operation of the bypass pump P1 is controlled by the controller 70 described later. When the bypass pump P1 is driven by the controller 70, ballast water is taken into the bypass pipe 12. A chemical supplied to the bypass pipe 12 is diluted by this ballast water. In this embodiment, the bypass pump P1 functions as a ballast water take-in part for taking ballast water into the bypass pipe 12.

The sterilizing agent holding part 30 is a container capable of storing an amount of sterilizing agent substantially capable of supplying a sufficient amount of sterilizing content to ballast water stored in the ballast tank 10. In this embodiment, a chlorine-based chemical is preferably used as the above-mentioned sterilizing agent. A chlorine-based chemical is a chemical aqueous solution which releases free available chlorine having a sterilizing action when the chlorine-based chemical is dissolved in water which forms a solvent or a chemical aqueous solution which generates a substance capable of releasing free available chlorine. As such a sterilizing agent, one or two or more kinds of mixed aqueous solutions selected from a group consisting of a calcium hypochlorite aqueous solution, a sodium hypochlorite aqueous solution, a trichloroisocyanuric acid aqueous solution, a dichloroisocyanuric acid aqueous solution, a dichloroisocyanuric acid sodium aqueous solution and a dichloroisocyanuric acid potassium aqueous solution. The sterilizing agent holding part 30 functions as a chemical holding part for storing a chemical.

The sterilization pipe 14 is connected to the sterilizing agent holding part 30. The sterilization pipe 14 connects the sterilizing agent holding part 30 and the bypass pipe 12 with each other, and forms a flow path where a sterilizing agent is supplied from the sterilizing agent holding part 30 to the bypass pipe 12. A valve V1 and a sterilizing agent pump P2 are mounted on the sterilization pipe 14 in order from a sterilizing agent holding part 30 side. Opening/closing of the valve V1 and a suction pressure of the sterilizing agent pump P2 are controlled by the controller 70 described later. By opening the valve V1 and by driving the sterilizing agent pump P2, a sterilizing agent held in the sterilizing agent holding part 30 is supplied to the bypass pipe 12 through the sterilization pipe 14. With the adjustment of a rotational speed of the sterilizing agent pump P2 by the controller 70, a flow rate of a sterilizing agent flowing through the sterilization pipe 14 can be adjusted. In this embodiment, the sterilization pipe 14 functions as a chemical pipe for supplying a chemical to the bypass pipe.

The neutralizing agent holding part 40 is a container capable of storing a neutralizing agent which neutralizes a sterilizing content of the sterilizing agent. When a chlorine-based chemical is used as a sterilizing agent, it is preferable to use a substance which exhibits an oxidation/reduction reaction with the chlorine-based chemical as a neutralizing agent. As such a neutralizing agent, for example, sodium sulfite, sodium bisulfite (sodium hydrogen sulfite), sodium thiosulfate and the like are named. Among these agents, sodium sulfite is preferably used as a neutralizing agent.

The neutralization pipe 15 is connected to the neutralizing agent holding part 40. The neutralization pipe 15 connects the neutralizing agent holding part 40 and the bypass pipe 12 with each other, and forms a flow path where a neutralizing agent is supplied from the neutralizing agent holding part 40 to the bypass pipe 12. A valve V2 and a neutralizing agent pump P3 are mounted on the neutralization pipe 15 in order from a neutralizing agent holding part 40 side. Opening/closing of the valve V2 and a rotational speed of the neutralizing agent pump P3 are controlled by the controller 70 described later. By opening the valve V2 and by driving the neutralizing agent pump P3, a neutralizing agent held in the neutralizing agent holding part 40 is supplied to the bypass pipe 12 through the neutralization pipe 15. With the adjustment of a rotational speed of the neutralizing agent pump P3 by the controller 70, a flow rate of a neutralizing agent flowing through the neutralization pipe 15 can be adjusted.

In this embodiment, as shown in FIG. 1, the bypass pipe 12 is disposed on a sterilizing agent holding part 30 side and a neutralizing agent holding part 40 side with respect to the ballast main pipe 11a. In other words, at least a portion of the bypass pipe 12 is disposed at the position between the ballast main pipe 11a, and the sterilizing agent holding part 30 and the neutralizing agent holding part 40. With such a configuration, a length of the sterilization pipe 14 is set shorter than a conventional pipe which is a connection path from the sterilizing agent holding part 30 to ballast main pipe 11a. A length of the neutralization pipe 15 is set shorter than a conventional pipe which is a connection path from the neutralizing agent holding part 40 to the ballast main pipe 11a.

In the sterilization pipe 14 or the neutralization pipe 15, ballast water containing a sterilizing agent or a neutralizing agent having high concentration compared to ballast water flowing through the bypass pipe 12 flows. Accordingly, it is preferable that at least inner surfaces of the sterilization pipe 14 and the neutralization pipe 15 are formed using a material having corrosion resistance substantially equal to or more than corrosion resistance of a material which is used for forming an inner surface of the bypass pipe 12. As a material used for forming the inner surfaces of the sterilization pipe 14 and neutralization pipe 15, one or more kinds selected from the group consisting of titanium, a polyvinyl chloride resin and a fluorocarbon resin are used. As the sterilization pipe 14 and the neutralization pipe 15, it is preferable to use a titanium pipe, a polyvinyl chloride pipe, a rolled steel pipe having a lining made of polyvinyl chloride resin or a fluorocarbon resin or a carbon steel pipe having a lining made of a polyvinyl chloride resin or a fluorocarbon resin, the sterilization pipe 14 and the neutralization pipe 15 may more preferably be a titanium pipe. With the use of the sterilization pipe 14 and the neutralization pipe 15 made of such a material, corrosion of the sterilization pipe 14 and the neutralization pipe 15 can be suppressed and hence, safety of the ballast water treatment device can be increased.

The mixer 50 is provided for agitating ballast water for making a chemical content (a sterilizing content or a neutralizing content) in ballast water taken into the ballast tank 10 uniform. The mixer 50 is mounted on the ballast main pipe 11a downstream of a connecting portion between the ballast main pipe 11a and the bypass pipe 12. Since ballast water flowing through the ballast main pipe 11a is agitated by the mixer 50, concentration of a chemical (a sterilizing agent or a neutralizing agent) resolved in ballast water can be made uniform. With such a configuration of this embodiment, at a point of time before ballast water is supplied to the mixer 50, a chemical in ballast water is relatively uniformly dispersed in ballast water. Accordingly, it is not always necessary to mount a large-sized mixer.

The measurement bypass pipe 13 is provided for dividing a part of ballast water for measuring the concentration of a chemical content. As shown in FIG. 1, both ends of the measurement bypass pipe 13 are connected to the ballast main pipe 11a downstream of the mixer 50. Since the measurement bypass pipe 13 is connected to the ballast main pipe 11a, a flow path is formed where a part of ballast water flowing through the ballast main pipe 11a is divided from ballast water flowing through the ballast main pipe 11a and, thereafter, the part of ballast water is merged with ballast water flowing through the ballast main pipe 11a. A measurement pump P4 and the concentration measuring part 60 are respectively mounted on the measurement bypass pipe 13 in this order. By driving the measurement pump P4, ballast water flowing through the ballast main pipe 11a can be taken into the measurement bypass pipe 13. Driving of the measurement pump P4 is controlled by the controller 70 described later.

The concentration measuring part 60 is a concentration measuring meter which measures concentration of a chemical in ballast water flowing through ballast main pipe 11a. As the concentration measuring part 60, measurement instrument which uses a DPD reagent or the like can be named, for example. When a chlorine-based chemical is used as a sterilizing agent, there exists a correlation between concentration of a sterilizing content and chlorine concentration. This chlorine concentration (mg/L) is expressed as concentration of total residual oxidant (TRO) of ballast water, and can be measured by the above-mentioned measuring instrument using a DPD reagent. Provided that the concentration measuring part 60 can detect the concentration of a chemical in ballast water flowing through the ballast main pipe 11a, other kinds of sensors can be also used as the concentration measuring part 60 in the same manner.

A measurement result of the above-mentioned concentration measuring part 60 is fed back to the controller 70 described later. With such an operation, concentration of a chemical in ballast water flowing through the ballast main pipe 11a can be controlled. Based on a change in concentration of a chemical obtained in such an operation, rotational speeds of the sterilizing agent pump P2 and the neutralizing agent pump P3 are controlled. Accordingly, proper amounts of chemicals (a sterilizing agent and a neutralizing agent) can be supplied to ballast water flowing through the ballast main pipe 11a.

The controller 70 is formed of a computer which includes a determination part, an arithmetic operation part, a memory part and the like. The controller 70 is connected to the respective pumps P1 to P4, the respective valves V1 to V4 and the concentration measuring part 60 respectively. The controller 70 acquires information on concentration of a chemical in ballast water measured by the concentration measuring part 60, and controls the rotational speeds of the sterilizing agent pump P2 and the neutralizing agent pump P3 and also controls opening and closing of the respective valves V1 to V4 based on the information. By opening or closing the respective valves V1 to V4 by the controller 70, a flow water path through which ballast water flows is determined. Then, by setting rotational speeds of the sterilizing agent pump P2 and neutralizing agent pump P3 by the controller 70, flow rates of a sterilizing agent and neutralizing agent supplied to the bypass pipe 12 can be set. Accordingly, concentration of a chemical in ballast water flowing through the ballast main pipe 11a can be properly adjusted. The specific steps are described in a ballast water treatment method described hereinafter.

### [Ballast water treatment method]

The ballast water treatment method according to this embodiment which is performed using the above-mentioned ballast water treatment device 1 is described. Water treatment which uses ballast water treatment device 1 according to the above-mentioned embodiment is roughly classified into an operation (water filling operation) which is performed for taking in sea water as ballast water and for supplying sea water into the ballast tank 10, and an operation (water discharging operation) performed for discharging ballast water stored in the ballast tank 10 to the outside of the ship. In the water filling operation, a sterilizing agent is introduced into ballast water taken in from the outside of the ship. In the water discharging operation, a neutralizing agent which neutralizes a sterilizing content contained in the ballast water is introduced into ballast water stored in the ballast tank 10.

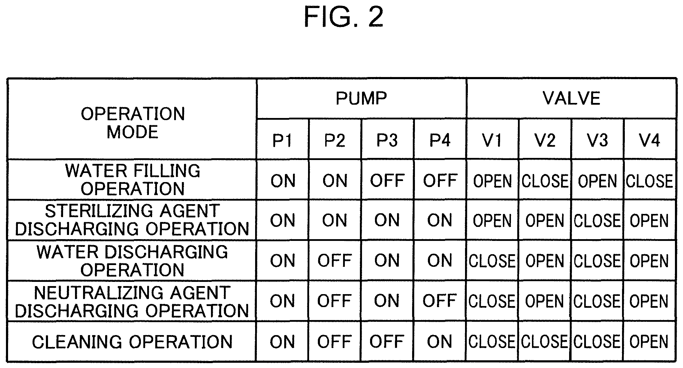

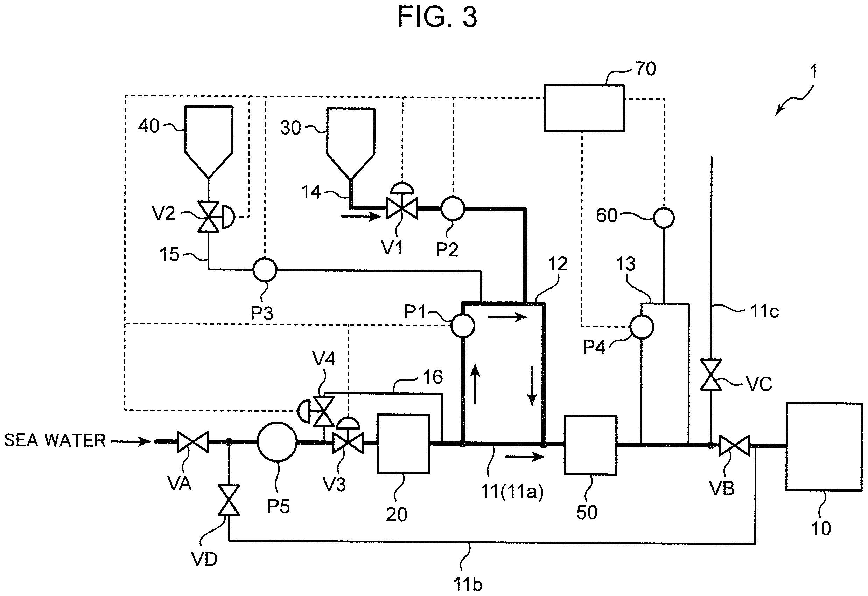

As operations affiliated with the above-mentioned respective operations, a sterilizing agent discharging operation for discharging a surplus amount of sterilizing agent held in the sterilizing agent holding part 30 to the outside of the ship after the water filling operation, a neutralizing agent discharging operation for discharging a surplus amount of neutralizing agent held in the neutralizing agent holding part 40 to the outside of the ship after the water discharging operation, and a cleaning operation for cleaning the bypass pipe 12 after the sterilizing agent discharging operation and the neutralizing agent discharging operation are performed. FIG. 2 is a control of the operations of the respective pumps and open/close states of the respective valves performed by the controller 70 at the time of performing various operations. FIG. 3 to FIG. 7 are respectively schematic views where the flow of ballast water at the time of performing the water filling operation, the sterilizing agent discharging operation, the water discharging operation, the neutralizing agent discharging operation and the cleaning operation is indicated by a bold line and an arrow. Hereinafter, the respective operations will be individually described.

### (Water filling operation)

The water filling operation is performed for filling ballast water in the ballast tank 10. At the time of performing the water filling operation, as shown in FIG. 2, the controller 70 drives the bypass pump P1, adjusts a rotational speed of the sterilizing agent pump P2, brings the valves V1, V3 into an open state, and brings the valves V2, V4 into a closed state. Hereinafter, the specific flow of ballast water is described with reference to FIG. 3.

Firstly, ballast water is pumped up into the ballast main pipe 11a by a suction force of the ballast pump P5. At the time of the water filling operation, the valve V3 is in an open state and the valve V4 is in a closed state. Accordingly, ballast water pumped into the ballast main pipe 11a is filtered by the filter device 20 mounted on the ballast main pipe 11a without flowing into the roundabout bypass pipe 16. Accordingly, relatively large foreign substances and the like contained in ballast water are removed.

Next, a part of ballast water flowing through the ballast main pipe 11a is divided to form a divided flow flowing through the bypass pipe 12 by a suction force of the bypass pump P1. A flow rate of the divided flow to the bypass pipe 12 is determined based on a pump pressure of the bypass pump P1. Specifically, it is preferable that the flow rate of the divided flow to the bypass pipe 12 be 1/1000 to 1/10 inclusive of a flow rate of ballast water flowing through the ballast main pipe 11a. It is more preferable that such flow rate of the divided flow be 1/500 to 1/20 inclusive of the flow rate of ballast water flowing through the ballast main pipe 11a. It is still more preferable that the flow rate of the divided flow be 1/200 to 1/50 inclusive of the flow rate of ballast water flowing through the ballast main pipe 11a. By allowing a part of ballast water to form a divided flow at such a rate, a sterilizing agent is properly diluted in the bypass pipe 12. Accordingly, when the ballast main pipe 11a and the bypass pipe 12 merge with each other, it is possible to suppress the occurrence of non-uniformity in the concentration of a sterilizing agent in ballast water.

Next, a sterilizing agent in the sterilizing agent holding part 30 is supplied to the bypass pipe 12 through the sterilization pipe 14 by a suction force of the sterilizing agent pump P2. Accordingly, a sterilization agent is supplied to ballast water flowing through the bypass pipe 12. A flow rate of a sterilizing agent flowing through the sterilization pipe 14 is adjusted by increasing or decreasing a rotational speed of the sterilizing agent pump P2. It is preferable that the flow rate of a sterilizing agent be 1/1000 to 1/10 inclusive of a flow rate of ballast water flowing though the bypass pipe 12. It is more preferable that the flow rate of a sterilizing agent be 1/500 to 1/20 inclusive of a flow rate of ballast water flowing though the bypass pipe 12. It is still more preferable that the flow rate of a sterilizing agent be 1/200 to 1/50 inclusive of a flow rate of ballast water flowing though the bypass pipe 12. By supplying a sterilizing agent to the bypass pipe 12 at such a rate of flow rate, it is possible to suppress concentration of a sterilizing agent in ballast water flowing through the bypass pipe 12 from becoming excessively high. A flow rate of a sterilizing agent flowing through the sterilization pipe 14 is set corresponding to concentration of a sterilizing agent held in the sterilizing agent holding part 30. Accordingly, the above-mentioned preferable numerical value ranges merely exemplify one example.

In this embodiment, a sterilizing agent flowing through the sterilization pipe 14 is diluted by ballast water flowing through the bypass pipe 12 at a connecting portion between the sterilization pipe 14 and the bypass pipe 12. This diluted ballast water is further diluted by ballast water flowing through the ballast main pipe 11a at a connecting portion between the bypass pipe 12 and the ballast main pipe 1 la. For example, in the case where a chlorine-based chemical having TRO concentration of approximately 10000 ppm is used as a sterilizing agent, the chlorine-based chemical is diluted to 60 ppm to 300 ppm inclusive by ballast water flowing through the bypass pipe 12. This diluted ballast water is diluted to TRO concentration of 10 ppm or less by ballast water flowing through the ballast main pipe 11a. Accordingly, it is preferable that TRO concentration of ballast water flowing through the bypass pipe 12 be 60 ppm to 300 ppm inclusive, and TRO concentration of ballast water flowing through the ballast main pipe 11a be 10 ppm or less. The controller 70 controls a rotational speed (suction force) of the sterilizing agent pump P2 so that such concentration is acquired. In this manner, by diluting a sterilizing agent in ballast water at 2 stages, a sterilizing agent can be easily diluted into ballast water compared to the case where a sterilizing agent is directly supplied to the ballast main pipe 11a as in the prior art. Accordingly, the concentration of a sterilizing agent in ballast water flowing through the ballast main pipe 11a is minimally made non-uniform.

Next, ballast water flowing through the ballast main pipe 11a after the ballast main pipe 11a merges with the bypass pipe 12 flows into the mixer 50, and ballast water is agitated by the mixer 50. Accordingly, ballast water where concentration of a sterilizing content is made uniform can be acquired. Since ballast water which passes this mixer 50 is supplied to the ballast tank 10, ballast water where concentration of a sterilizing agent is made uniform is filled in the ballast tank 10. In the ballast water treatment device 1 according to this embodiment, a sterilizing agent is diluted at two stages consisting of the connecting portion between the sterilization pipe 14 and the bypass pipe 12 and the connecting portion between the bypass pipe 12 and the ballast main pipe 11a. Accordingly, concentration of a sterilizing agent in ballast water can be made uniform upstream of the mixer 50. Accordingly, a sterilizing agent can be dispersed in ballast water uniformly even when an agitation speed of the mixer 50 is lowered or an agitation time of the mixer 50 is made short compared to the prior art.

### (Sterilizing agent discharging operation)

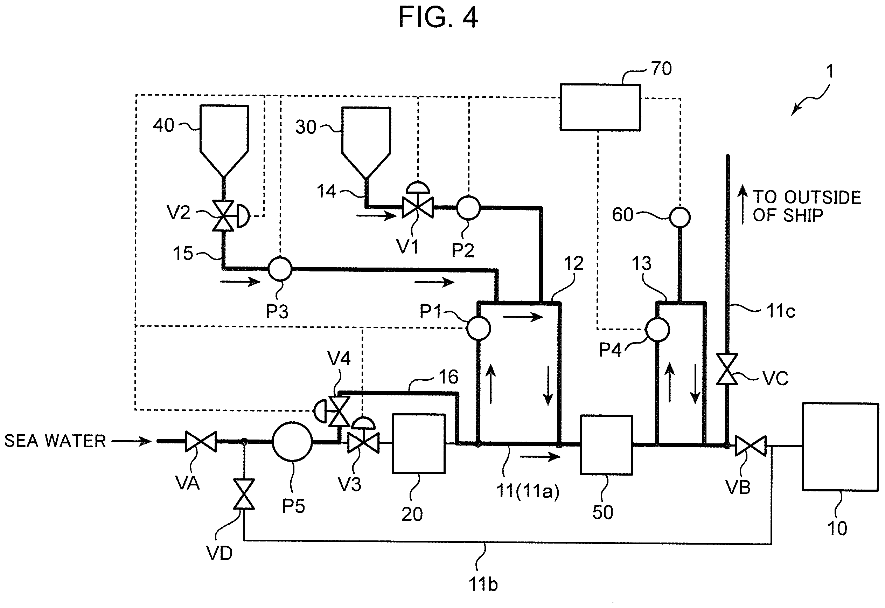

A sterilizing agent discharging operation is performed for discharging a surplus amount of sterilizing agent to the outside of the ship in the case where the surplus amount of sterilizing agent is held in the sterilizing agent holding part 30 after the above-mentioned water filling operation is finished. As shown in FIG. 2 and FIG. 4, at the time of performing the sterilizing agent discharging operation, the controller 70 adjusts rotational speeds of the sterilizing agent pump P2 and the neutralizing agent pump P3, drives the bypass pump P1 and the measurement pump P4, brings the valves V1, V2, V4 into an open state, and brings the valve V3 into a closed state. The specific flow of ballast water will be described hereinafter.

Firstly, ballast water is pumped up into the ballast main pipe 11a by a suction force of the ballast pump P5. At the time of performing the sterilizing agent discharging operation, the valve V4 is in an open state and the valve V3 is in a closed state, accordingly, ballast water pumped up into the ballast main pipe 11a flows into the roundabout bypass pipe 16, and is returned to the ballast main pipe 11a while rounding about the filter device 20. Next, a part of ballast water flowing through the ballast main pipe 11a is divided to form a divided flow flowing through the bypass pipe 12 by a suction force of the bypass pump P1.

Next, by a suction force of the neutralizing agent pump P3, a neutralizing agent held in the neutralizing agent holding part 40 is supplied to the bypass pipe 12 through the neutralization pipe 15. A supply amount of a neutralizing agent is adjusted by increasing or decreasing a rotational speed of the neutralizing agent pump P3 so that a neutralizing agent is supplied to the bypass pipe 12 to a flow rate of an extent that a sterilizing agent can be neutralized. After a neutralizing agent is supplied to the bypass pipe 12, a sterilizing agent in the sterilizing agent holding part 30 is supplied to the bypass pipe 12 through the sterilization pipe 14 by a suction force of the sterilizing agent pump P2. A supply amount of a sterilizing agent is adjusted by increasing or decreasing a rotational speed of the sterilizing agent pump P2. A sterilizing agent is supplied to the bypass pipe 12 after supplying of a neutralizing agent and hence, the sterilizing agent is neutralized by the neutralizing agent immediately after the sterilizing agent is supplied to the bypass pipe 12. Accordingly, it is possible to prevent the concentration of a sterilizing agent in ballast water flowing through the bypass pipe 12 from becoming excessively high.

Next, ballast water flowing through the ballast main pipe 11a flows into the mixer 50, and ballast water is agitated by the mixer 50. Accordingly, a sterilizing agent in ballast water can be neutralized by a neutralizing agent with certainty.

Next, after passing the mixer 50, ballast water flowing through the ballast main pipe 11a is taken into the measurement bypass pipe 13 by a suction force of the measurement pump P4. Then, concentrations of a sterilizing agent and a neutralizing agent in ballast water flowing through the measurement bypass pipe 13 are measured by the concentration measuring part 60, and a result of the measurement is transmitted to the controller 70. The controller 70 determines whether or not concentration measured by the concentration measuring part 60 falls within a reference range which allows discharging of ballast water to the outside of the ship, and warning is issued in the case where the concentration does not fall within the reference range. In this case, the reference range is preliminarily set based on a sterilizing agent and a neutralizing agent. On the other hand, in the case where the concentration of a sterilizing agent in ballast water measured by the concentration measuring part 60 falls within the reference range, ballast water is discharged from the ballast main pipe 11a to the outside of the ship through the discard pipe 11c. In this manner, by preliminarily measuring concentration of a sterilizing agent in ballast water discharged from the discard pipe 11c, and by feeding back a result of the measurement, the concentration of a sterilizing agent in ballast water discharged to the outside of the ship can be adjusted to a proper value. By discharging a surplus amount of a sterilizing agent held by the sterilizing agent holding part 30 to the outside in accordance with such steps, it is possible to prevent a sterilizing agent held by the sterilizing agent holding part 30 from being densified and solidified and hence, corrosion of the sterilizing agent holding part 30 can be prevented.

### (Water discharging operation)

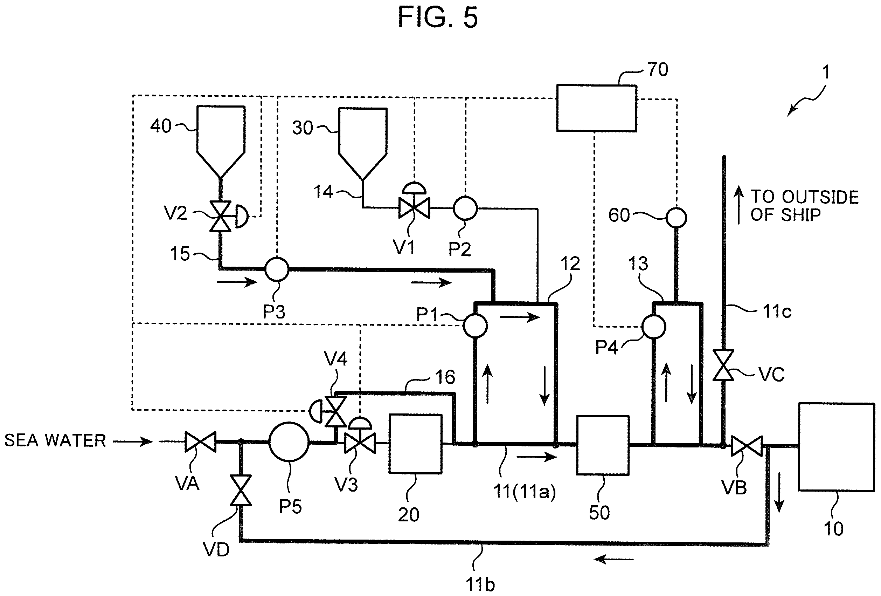

The water discharging operation is performed for discharging ballast water held in the ballast tank 10 to the outside of the ship. At the time of performing this water discharging operation, as shown in FIG. 2 and FIG. 5, the controller 70 adjusts a rotational speed of the neutralizing agent pump P3 and drives the bypass pump P1 and the measurement pump P4, brings the valves V2, V4 into an open state, and brings the valves V1, V3 into a closed state. The specific flow of ballast water will be described hereinafter.

Firstly, ballast water in the ballast tank 10 is pumped into the ballast main pipe 11a by a suction force of the ballast pump P5, and ballast water is returned to a portion of the ballast main pipe 11a upstream of the ballast pump P5 through the return pipe 11b. At the time of performing the water discharging operation, the valve V3 is in a closed state and the valve V4 is in an open state. Accordingly, ballast water flowing through the ballast main pipe 11a flows into the roundabout bypass pipe 16, and is returned to the ballast main pipe 11a by rounding about the filter device 20. At the time of performing the water discharging operation, it is unnecessary for ballast water to pass the filter device 20 and hence, a flow speed of ballast water flowing through the ballast main pipe 11a is increased. Next, a part of ballast water flowing through the ballast main pipe 11a is divided to form a divided flow flowing through the bypass pipe 12 by a suction force of the bypass pump P1.

Next, by a suction force of the neutralizing agent pump P3, a neutralizing agent held in the neutralizing agent holding part 40 is supplied to the bypass pipe 12 through the neutralization pipe 15. Then, after ballast water flowing through the bypass pipe 12 is supplied to the ballast main pipe 11a, ballast water is agitated by the mixer 50. After ballast water is agitated by the mixer 50, in the same manner as the above-mentioned sterilizing agent discharging operation, concentration of a sterilizing agent is measured by the concentration measuring part 60, and ballast water is discharged to the outside of the ship from the ballast main pipe 11a through the discard pipe 11c based on a result of the measurement. It is needless to say that in the case where the concentration of a sterilizing agent measured by the concentration measuring part 60 exceeds the reference range, a supply amount of a neutralizing agent is increased by increasing a rotational speed of the neutralizing agent pump P3.

### (Neutralizing agent discharging operation)

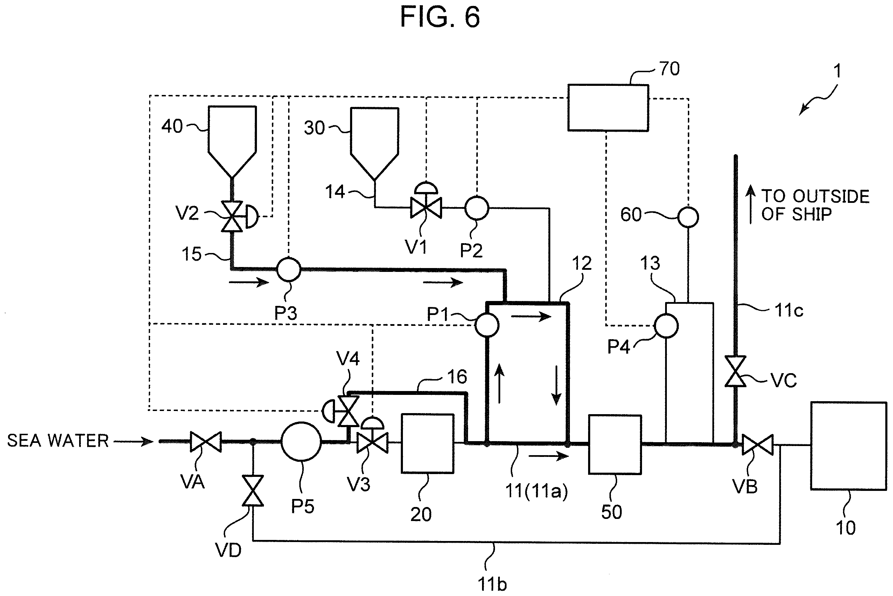

In the case where a surplus amount of neutralizing agent is held in the neutralizing agent holding part 40 after the above-mentioned water discharging operation is finished, the neutralizing agent discharging operation is performed so as to discharge the surplus amount of the neutralizing agent to the outside of the ship. As shown in FIG. 2 and FIG. 6, at the time of performing the neutralizing agent discharging operation, the controller 70 drives the bypass pump P1, adjusts a rotational speed of the neutralizing agent pump P3, brings the valves V2, V4 into an open state, and brings the valves V1, V3 into a close state. The specific flow of ballast water will be described hereinafter.

Firstly, ballast water is pumped up into the ballast main pipe 11a by a suction force of the ballast pump P5. At the time of performing the neutralizing agent discharging operation, the valve V4 is in an open state and the valve V3 is in a closed state. Accordingly, ballast water which is pumped up into the ballast main pipe 11a flows into the roundabout bypass pipe 16, rounds about the filter device 20 mounted on the ballast main pipe 11a, and is returned to the ballast main pipe 11a. Next, a part of ballast water flowing through the ballast main pipe 11a is divided to form a divided flow flowing through the bypass pipe 12 by a suction force of the bypass pump P1.

Next, by a suction force of the neutralizing agent pump P3, a neutralizing agent held in the neutralizing agent holding part 40 is supplied to the bypass pipe 12 through the neutralization pipe 15. A supply amount of a neutralizing agent is adjusted by increasing or decreasing a rotational speed of the neutralizing agent pump P3. Then, ballast water which flows through the ballast main pipe 11a flows into the mixer 50, and ballast water is agitated by the mixer 50. With such an operation, a neutralizing agent in ballast water is made uniform.

Next, ballast water where a neutralizing agent is made uniform by the mixer 50 is discharged to the outside of the ship through the discard pipe 11c. By performing such a neutralizing agent discharging operation, a surplus amount of neutralizing agent can be discharged from the neutralizing agent holding part 40 to the outside of the ship. Accordingly, it is possible to prevent a neutralizing agent held in the neutralizing agent holding part 40 from being densified and solidified, and it is also possible to prevent the degradation and deterioration of a neutralizing agent.

### (Cleaning operation)

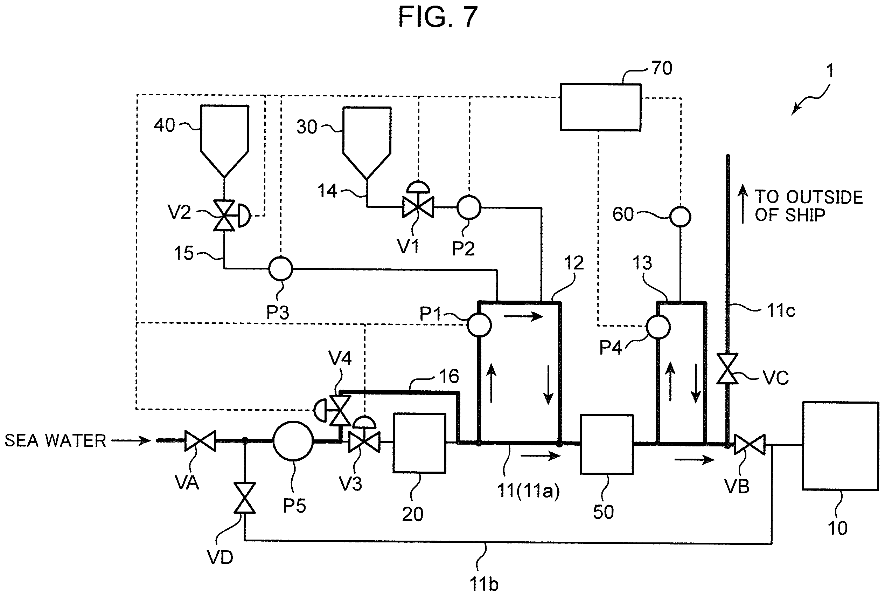

The cleaning operation is performed for discharging a sterilizing agent or a neutralizing agent remaining in the respective pipes in the ballast water treatment device 1 to the outside of the ship, or for replacing water which flows in the ballast pipe 11 and the bypass pipe 12. At the time of performing such a cleaning operation, as shown in FIG. 2 and FIG. 7, the controller 70 drives the bypass pump P1 and the measurement pump P4, brings the valve V4 into an open state, and brings the valves V1 to V3 into a closed state. The specific flow of ballast water will be described hereinafter.

Firstly, sea water is taken into the ballast main pipe 11a by a suction force of the ballast pump P5. At the time of performing the cleaning operation, the valve V4 is in an open state. Accordingly, sea water (ballast water) taken into the ballast pipe 11 flows into the roundabout bypass pipe 16, rounds about the filter device 20, and is returned to the ballast main pipe 11a. Next, a part of ballast water is supplied to the bypass pipe 12 by a suction force of the bypass pump P1, and remaining ballast water flows through the ballast main pipe 11a. Then, ballast water flowing through the bypass pipe 12 merges with ballast water flowing through the ballast main pipe 11a and, thereafter, ballast water is agitated by the mixer 50. After ballast water is agitated by the mixer 50, ballast water is taken into the measurement bypass pipe 13 by a suction force of the measurement pump P4, and is discharged to the outside of the ship through the discard pipe 11c. In this manner, by making ballast water flow through the ballast main pipe 11a, the bypass pipe 12 and the measurement bypass pipe 13, a sterilizing agent and a neutralizing agent adhered to the respective pipes can be removed by ballast water and are made to flow together with ballast water. Accordingly, it is possible to prevent the occurrence of a defect such as corrosion of respective pipes by a sterilizing agent and a neutralizing agent. Further, by replacing water remaining in the ballast main pipe 11a and water remaining in the bypass pipe 12 with ballast water, it is possible to prevent the corrosion of the ballast main pipe 11a and the bypass pipe 12.

### <Manner of operation and advantageous effects of ballast water treatment device>

Next, the manner of operation and advantageous effects of the above-mentioned ballast water treatment device 1 and the ballast water treatment method are described. The ballast water treatment device 1 according to this embodiment includes the bypass pipe 12 having both ends thereof connected to the ballast main pipe 11a which is connected to the ballast tank 10 and through which ballast water flows, the bypass pipe 12 being configured to allow a part of ballast water which flows through the ballast main pipe 11a to form a divided flow from the ballast main pipe 11a and configured to allow the divided flow to be merged with the ballast main pipe 11a, the sterilizing agent holding part 30 in which a sterilizing agent is stored and the sterilization pipe 14 configured to connect the sterilizing agent holding part 30 and the bypass pipe 12 with each other and supplies the chemical from the sterilizing agent holding part 30 to the bypass pipe 12. With such a configuration, a chemical held by the sterilizing agent holding part 30 is once diluted by divided ballast water which is divided from ballast water flowing through the ballast main pipe 11a and flows through the bypass pipe 12 and, thereafter, is supplied to the ballast main pipe 11a. Accordingly, compared to the case where a sterilizing agent held in the sterilizing agent holding part 30 is directly supplied to the ballast main pipe 11a not via the bypass pipe 12, it is possible to suppress the occurrence of non-uniformity in concentration of a sterilizing agent in ballast water flowing through the ballast main pipe 11a. By suppressing the occurrence of non-uniformity in concentration of a chemical, it is no more necessary to mount a mixer having a complicated shape and having a large pressure loss on the ballast pipe. Further, in the case where a static mixer is used as the mixer, a mixing distance can be shortened. Particularly, even in the case where a chlorine-based chemical of high concentration is used as the above-mentioned chemical, the chlorine-based chemical of high concentration is supplied to the ballast pipe via the bypass pipe and hence, it is possible to prevent the ballast pipe from being brought into contact with the chlorine-based chemical of high concentration. Accordingly, it is possible to prevent the occurrence of a defect such as corrosion, clogging or the like of the ballast main pipe 11a.

Further, the bypass pipe 12 is mounted on the ballast main pipe 11a on a side closer to the sterilizing agent holding part 30 than the ballast main pipe 11a. Accordingly, the sterilization pipe 14 can be connected to the bypass pipe 12 positioned closer to the sterilization pipe 14 than the ballast main pipe 11a. Accordingly, compared to the case where the sterilization pipe 14 is connected to the ballast main pipe 11a, a length from the sterilizing agent holding part 30 to the sterilization pipe 14 can be shortened. As a result, an amount of a sterilizing agent remaining in the sterilization pipe 14 after the injection of a sterilizing content into the ballast main pipe 11a is finished can be reduced compared to a conventional sterilization pipe. Accordingly, a running cost can be reduced.

In the case where a sterilizing agent is maintained being held in the sterilization pipe 14 after the supply of the sterilizing agent to the ballast main pipe 11a is finished, there is a possibility that a sediment is generated due to degradation and deterioration of a sterilizing agent in the sterilization pipe 14. Further, in the case where a chlorine-based chemical is used as a sterilizing agent, for example, there is a possibility that a toxic substance such as a chlorine-based gas is generated due to the degradation and the deterioration of the chlorine-based chemical. In this respect, by adopting the configuration where the sterilization pipe 14 can be shortened as in the case of this embodiment, a residual liquid amount of a sterilizing agent held in the sterilization pipe 14 can be reduced. Accordingly, safety of the ballast water treatment device 1 can be increased. The sterilization pipe 14 through which the sterilizing agent flows allows flowing of a chemical of high concentration and hence, it is necessary to form the sterilization pipe 14 using a material having higher corrosion resistance than the ballast main pipe 11a and the bypass pipe 12. Since the length of the sterilization pipe 14 can be shortened as described above, it is possible to reduce a cost necessary for installation of the sterilization pipe 14.

According to the invention, at least an inner surface of the bypass pipe 12 is formed using a material having more excellent corrosion resistance than a material used for forming the ballast main pipe 11a. Accordingly, even in the case where the concentration of a chemical in ballast water flowing through the bypass pipe 12 becomes non-uniform to some extent, it is possible to suppress the occurrence of corrosion of the bypass pipe 12. By suppressing the occurrence of corrosion of the bypass pipe 12, it is possible to provide the ballast water treatment device 1 having higher safety. Non-uniformity of concentration of a sterilizing agent in ballast water flowing through the ballast main pipe 11a is reduced compared to the prior art. Accordingly, even in the case where the ballast main pipe 11a is formed using substantially the same material as the prior art, the corrosion of the ballast main pipe 11a minimally occurs.

The ballast water treatment device 1 according to the above-mentioned embodiment includes the neutralizing agent holding part 40 where a neutralizing agent exhibiting a property of neutralizing a sterilizing agent is stored and the neutralization pipe 15 which connects the neutralizing agent holding part 40 and the bypass pipe 12 to each other and through which a neutralizing agent is supplied from the neutralizing agent holding part 40 to the bypass pipe 12. With such a configuration, by making a sterilizing agent flow through the bypass pipe 12 and, at the same time, by making a neutralizing agent flow through the bypass pipe 12, the sterilizing agent can be neutralized by the neutralizing agent. Accordingly, it is possible to discharge a sterilizing agent to the outside after the sterilizing agent is neutralized to a level that discharging of the sterilizing agent is permitted by a law.

Further, the connecting portion between the neutralization pipe 15 and the bypass pipe 12 is positioned on an upstream side of the bypass pipe 12 compared to the connecting portion between the sterilization pipe 14 and the bypass pipe 12. With such a configuration, a neutralizing agent is supplied to the bypass pipe 12 upstream of the position where a sterilizing agent is supplied to the bypass pipe 12. Accordingly, even when a sterilizing agent of high concentration flows from the sterilization pipe 14 to the bypass pipe 12, the sterilizing agent can be instantaneously neutralized by a neutralizing agent. As a result, it is possible to suppress the excessive increase of the concentration of a sterilizing agent flowing through the bypass pipe 12.

The ballast water treatment device 1 according to the above-mentioned embodiment also has the bypass pump P1 (one example of a ballast water take-in part) for taking ballast water from the ballast main pipe 11a into the bypass pipe 12. The bypass pump P1 is provided on the bypass pipe 12. With such a configuration, by taking ballast water into the bypass pipe 12 by the bypass pump P1, a sterilizing agent supplied to the bypass pipe 12 can be diluted. Accordingly, the excessive increase of concentration of a sterilizing agent in ballast water flowing through the ballast main pipe 11a can be suppressed and hence, the occurrence of corrosion of the ballast main pipe 11a can be suppressed.

In the above-mentioned embodiment, the ballast water treatment device 1 further has the concentration measuring part 60 which is connected downstream of a merging portion between the ballast main pipe 11a and the bypass pipe 12 and measures the concentrations of a sterilizing agent and a neutralizing agent in ballast water flowing through the ballast main pipe 11a. With such a configuration, by measuring the concentrations of a sterilizing agent and a neutralizing agent in ballast water flowing through the ballast main pipe 11a by the concentration measuring part 60, at the time of supplying ballast water to the ballast tank 10, the concentration of a sterilizing agent in ballast water supplied to the ballast tank 10 can be known. On the other hand, at the time of discharging ballast water stored in the ballast tank 10 to the outside of the ship, the concentration of a sterilizing agent in ballast water to be discharged to the outside of the ship can be known.

Further, by taking ballast water flowing through the ballast main pipe 11a into the bypass pipe 12 by the bypass pump P1 (ballast water take-in part), a chemical supplied to the bypass pipe 12 can be diluted by ballast water in the bypass pipe 12. Accordingly, while knowing the concentrations of a sterilizing agent and a neutralizing agent in ballast water by the concentration measuring part 60, it is possible to allow a part of ballast water to flow from the ballast main pipe 11a to the bypass pipe 12 by the bypass pump P1 (ballast water take-in part) thus forming a divided flow. Accordingly, the excessive increase of concentrations of a sterilizing agent and a neutralizing agent in ballast water flowing through the bypass pipe 12 can be avoided and hence, the occurrence of corrosion of the bypass pipe 12 can be suppressed.

In the above-mentioned embodiment, the ballast water treatment device 1 further has the measurement bypass pipe 13. The measurement bypass pipe 13 has both ends thereof connected to the ballast main pipe 11a. With such a configuration, a part of ballast water flowing through the ballast main pipe 11a is divided from the ballast main pipe 11a and, thereafter, the part of the ballast water is merged with the ballast main pipe 11a. The concentration measuring part 60 is mounted on the measurement bypass pipe 13. Accordingly, at the time of measuring the concentrations of a sterilizing agent and a neutralizing agent in ballast water flowing through the ballast main pipe 11a, ballast water which is an object to be measured can be sampled in such a manner that the ballast water is sampled from the measurement bypass pipe 13 without directly sampling the ballast water from the ballast main pipe 11a. As a result, it is not always necessary to install the concentration measuring part 60 in the vicinity of the ballast main pipe 11a. Accordingly, the measurement bypass pipe 1 3 can be extended to the position where the installation of the concentration measuring part 60 is desirable and hence, the degree of freedom in determining the position where the concentration measuring part 60 is installed can be increased.

A ballast water treatment method using the above-mentioned ballast water treatment device 1 includes a step of allowing ballast water to flow through the ballast main pipe 11a connected to the ballast tank 10, a step of allowing a part of the ballast water which flows through the ballast main pipe 11a to flow into the bypass pipe 12 having both ends thereof connected to the ballast main pipe 11a to form a divided flow, and of merging the divided flow with the ballast water which flows through the ballast main pipe 11a and a step of supplying a sterilizing agent from the sterilizing agent holding part 30 in which a chemical is stored to the bypass pipe 12 through the sterilization pipe 14. With such a configuration, a chemical held by the sterilizing agent holding part 30 is once diluted by divided ballast water which is divided from ballast water flowing through the ballast main pipe 11a and flows through the bypass pipe 12 and, thereafter, is supplied to the ballast main pipe 11a. Accordingly, compared to the case where a sterilizing agent is directly supplied to the ballast main pipe 11a not via the bypass pipe 12, it is possible to suppress the occurrence of non-uniformity in concentration of a sterilizing agent in ballast water flowing through the ballast main pipe 11a.

Further, the above-mentioned water treatment method further includes a step of measuring the concentration of a chemical in ballast water flowing through the ballast main pipe 11a. Accordingly, at the time of supplying ballast water to the ballast tank, the concentration of the chemical in ballast water supplied to the ballast tank can be known. On the other hand, at the time of discharging ballast water stored in the ballast tank to the outside of the ship, the concentration of a chemical in ballast water to be discharged to the outside of the ship can be known.

### <Modification>

In the above-mentioned embodiment, the case has been described where both the sterilizing agent holding part 30 and the neutralizing agent holding part 40 are provided. However, either one of the sterilizing agent holding part 30 or the neutralizing agent holding part 40 can be omitted. In the case where sterilizing agent holding part 30 is omitted in the above-mentioned embodiment, the neutralizing agent holding part 40, the neutralization pipe 15 and the neutralizing agent in the above-mentioned embodiment respectively correspond to "chemical holding part", "chemical pipe" and "chemical". In this case, the ballast water treatment device is used only for a discharge operation where ballast water stored in the ballast tank 10 is discharged to the outside of the ship, and a take-in operation of ballast water in the case of filling ballast water in the ballast tank 10 is performed using a different pipe path. When the sterilizing agent holding part 30 and the sterilization pipe 14 are omitted in this manner, it is not always necessary that the bypass pipe 12 and the measurement bypass pipe 13 are connected to the ballast main pipe 11a. For example, the bypass pipe 12 and the measurement bypass pipe 13 may be connected to the return pipe 11b, or may be connected to the discard pipe 11c.

On the other hand, in the case where the neutralizing agent holding part 40 is omitted in the above-mentioned embodiment, the sterilizing agent holding part 30, sterilization pipe 14, and the sterilizing agent in the above-mentioned embodiment respectively correspond to "chemical holding part", "chemical pipe", and "chemical". In this case, the ballast water treatment device is used only for a water filling operation where ballast water is filled in the ballast tank 10. In the case where ballast water stored in the ballast tank 10 is discharged to the outside of the ship, a different pipe path is used.

In the above-mentioned embodiment, the description has been made with respect to the case where a sterilizing agent and a neutralizing agent are supplied to the bypass pipe 12 as chemicals. However, chemicals supplied to the bypass pipe 12 are not limited to a sterilizing agent and a neutralizing agent, and the ballast water treatment device can be also used for supplying various additives to ballast water.

In the above-mentioned embodiment, the case has been described where the inner surface of the bypass pipe 12 is formed using a material having more excellent corrosion resistance than a material for forming the ballast main pipe 11a. Alternatively, the bypass pipe 12 per se is formed using a material having more excellent corrosion resistance than a material for forming the ballast main pipe 11a. Alternatively, a material having more excellent corrosion resistance than a material for forming the ballast pipe is applied to the inner surface of the bypass pipe 12 by coating.

According to the invention the connecting portion between the neutralization pipe 15 and the bypass pipe 12 is positioned on an upstream side of the bypass pipe 12 compared to the connecting portion between the sterilization pipe 14 and the bypass pipe 12.

In the above-mentioned embodiment, the description has been made with respect to the case where the bypass pump P1 corresponds to "ballast water take-in part". However, provided that the ballast water take-in part can take ballast water into bypass pipe 12, the ballast water take-in part is not limited to only the above-mentioned bypass pump P1. As the ballast water take-in part, for example, a flow dividing valve mounted on the connecting portion between the ballast main pipe 11a and the bypass pipe 12 can be also used. In the case where a flow dividing valve is mounted on the ballast main pipe 11a, a part of ballast water can be made to flow into the bypass pipe 12 as a divided flow by adjusting the direction of the flow dividing valve mounted on the ballast main pipe 11a.

A flow rate of ballast water flowing through the bypass pipe 12 changes by being affected by water pressure in the ballast main pipe 11a. As a result, when a flow rate of the ballast water becomes a predetermined flow rate or less, the injection of a chemical becomes unstable. On the other hand, by mounting the bypass pump P1 on the bypass pipe 12, it is possible to acquire an advantageous effect that a flow rate of ballast water flowing through the bypass pipe 12 can be set to a predetermined flow rate or more.

In the above-mentioned embodiment, the description has been made with respect to the case where the concentration measuring part 60 is mounted on the measurement bypass pipe 13 disposed downstream of the merging portion between the ballast main pipe 11a and the bypass pipe 12. However, the position where the concentration measuring part 60 is disposed is not limited to such a position. For example, the concentration measuring part 60 may be mounted on the ballast tank 10, or may be mounted on the ballast main pipe 11a.

In the above-mentioned embodiment, the description has been made with respect to the case where the bypass pump P1 takes ballast water from the ballast main pipe 11a into the bypass pipe 12 based on a result of measurement by the concentration measuring part 60. However, in the case where it is unnecessary to adjust the concentration of a sterilizing agent or a neutralizing agent in ballast water, the concentration measuring part 60 can be omitted. In this case, the measurement bypass pipe 13 can be also omitted.

In the above-mentioned embodiment, the description has been made with respect to the case where the controller 70 controls rotational speeds of the sterilizing agent pump P2 and the neutralizing agent pump P3. However, the control of the rotational speeds is not limited to the control by the controller 70, and rotational speeds of the respective pumps can be manually adjusted by an operator. In the same manner, a control of opening/closing of the valves V1 to V4 is not limited to a control by the controller 70, and an operator may manually open or close the respective valves V1 to V4. In the above-mentioned embodiment, the description has been made with respect to the case where the manually operated valves VA to VC are manually opened or closed. However, the controller 70 can automatically control opening or closing of the manually operated valves VA to VC.

In the above-mentioned embodiment, description has been made with respect to the case where one valve V1 is mounted on the sterilization pipe 14. However, two or more valves may be mounted on the sterilization pipe 14. In the case where only one valve V1 is mounted on the sterilization pipe 14 as shown in FIG. 1, when the valve V1 is broken, a sterilizing agent held in the sterilizing agent holding part 30 is taken into the bypass pipe 12 due to a siphon effect. On the other hand, by mounting two or more valves on the sterilization pipe 14, even if one valve is broken, it is possible to prevent a sterilizing agent from flowing through the sterilization pipe 14 by other valves. Accordingly, it is possible to prevent a sterilizing agent held in the sterilizing agent holding part 30 from being supplied to the bypass pipe 12. The same goes for the neutralization pipe 15. That is, in the above-mentioned embodiment, description has been made with respect to the case where one valve V2 is mounted on the neutralization pipe 15. However, two or more valves may be mounted on the neutralization pipe 15.

In the above-mentioned embodiment, the description has been made with respect to the case where the controller 70 does not control a rotational speed of the ballast pump P5. However, the controller 70 may control a rotational speed of the ballast pump P5 in addition to a control of rotational speeds of the above-mentioned sterilizing agent pump P2 and the neutralizing agent pump P3.

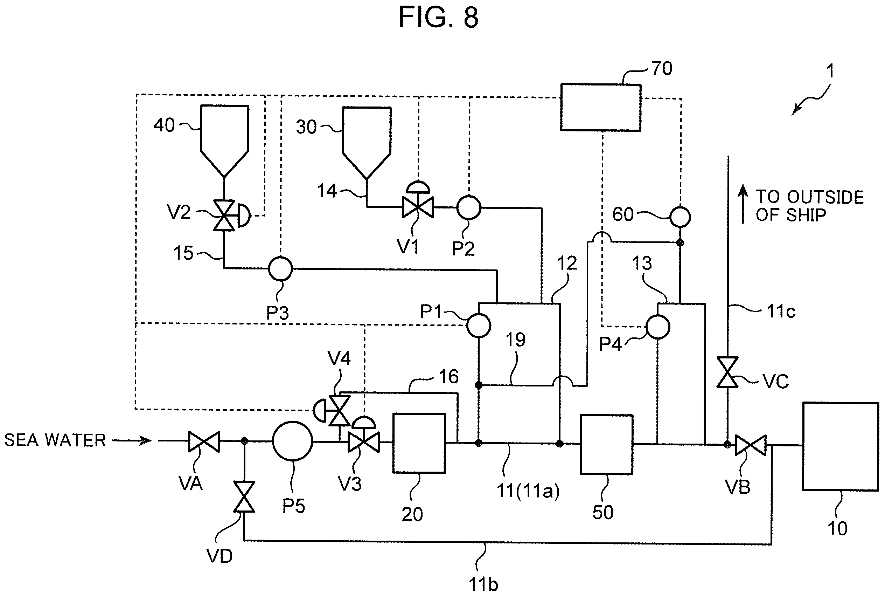

In the above-mentioned embodiment, the description has been made with respect to the case where the concentration of a chemical in ballast water after ballast water passes the mixer 50 is measured by the concentration measuring part 60. However, as shown in FIG. 8, the concentration of a chemical in ballast water after flowing into the bypass pipe 12 may be measured by the concentration measuring part 60. FIG. 8 is a schematic view showing a modification of the ballast water treatment device according to the above-mentioned embodiment. In the modification shown in FIG. 8, a measurement flow path 19 which connects a portion of the bypass pipe 12 upstream of the bypass pump P1 and the concentration measuring part 60 is provided. By providing the measurement flow path 19 at such a position, the concentration of a chemical in ballast water immediately after ballast water is taken into the bypass pipe 12 can be measured. Accordingly, for example, at the time of discharging ballast water stored in the ballast tank 10, the concentration of a chemical (sterilizing agent) in ballast water stored in the ballast tank 10 can be measured by the concentration measuring part 60. By feeding back a result acquired by the concentration measuring part 60 to the controller 70, an amount of neutralizing agent just enough to neutralize a sterilizing agent in ballast water can be supplied from the neutralizing agent holding part 40 to the bypass pipe 12. In accordance with the above-mentioned operations, ballast water scheduled to be discharged can be discharged to the outside of the ship after the ballast water is completely neutralized.

The above-mentioned embodiment can be recapitulated as follows.

The ballast water treatment device according to the embodiment includes the bypass pipe having both ends connected to the ballast pipe which is connected to the ballast tank and through which ballast water flows, the bypass pipe being configured to allow a part of ballast water flowing through the ballast pipe to form a divided flow from the ballast pipe and to allow the divided flow to be merged with the ballast pipe, the chemical holding part in which a chemical is stored and the chemical pipe configured to connect the chemical holding part and the bypass pipe with each other and supplies the chemical from the chemical holding part to the bypass pipe.

According to the invention, the chemical held by the chemical holding part is diluted once by ballast water which is divided from the ballast pipe and flows through the bypass pipe, and thereafter is supplied to the ballast pipe. Accordingly, compared to the case where a chemical held in the chemical holding part is directly supplied to the ballast pipe without flowing through the bypass pipe (the case described in Patent Literature 1), it is possible to suppress the occurrence of non-uniformity in concentration of the chemical in ballast water flowing through the ballast pipe. For example, according to this embodiment, in the case where a chemical having the concentration of 10000 ppm is supplied to the ballast pipe, the chemical is diluted one hundred times to 100 ppm in the bypass pipe and, thereafter, is supplied to the ballast pipe. Accordingly, compared to the case where a chemical having the concentration of 10000 ppm is directly supplied to the ballast pipe, it is possible to suppress the occurrence of non-uniformity in concentration of a chemical in ballast water flowing through the ballast pipe. By suppressing the occurrence of non-uniformity in concentration of a chemical, it is no longer necessary to mount a large-scale mixer on the ballast pipe. Further, in the case where a static mixer is used as the mixer, a mixing distance can be shortened.

Particularly, in the case where a chlorine-based chemical of high concentration is used as the above-mentioned chemical, the chlorine-based chemical cannot be dissolved in ballast water, and precipitates and is solidified in the ballast pipe. This solidified chlorine-based chemical causes corrosion of the ballast pipe, clogging of the ballast pipe, the increase of a pressure loss, as well as other flow obstacles. To overcome such drawbacks, according to the configuration of this embodiment, a chlorine-based chemical of high concentration is supplied to the ballast pipe via the bypass pipe and hence, it is possible to prevent the ballast pipe from being brought into contact with the chlorine-based chemical of high concentration. Accordingly, it is possible to prevent the occurrence of a defect such as corrosion, clogging or the like of the ballast pipe. In this embodiment, a chemical is not limited to a sterilizing agent such as a chlorine-based chemical, and may be a neutralizing agent which neutralizes sterilizing agent.

Further, in the case where the above-mentioned bypass pipe is mounted on the ballast pipe such that the bypass pipe is positioned on a more chemical holding part side than the ballast pipe, the chemical pipe can be connected to the bypass pipe positioned closer to the chemical pipe than the ballast pipe. Accordingly, compared to the case where the chemical pipe is directly connected to the ballast pipe as in the prior art, a length from the chemical holding part to the chemical pipe can be shortened. As a result, an amount of a chemical remaining in the chemical pipe after the injection of a sterilizing content into the ballast pipe is finished can be reduced compared to an amount of a chemical remaining in a conventional chemical pipe. Accordingly, a running cost can be reduced.

In the case where a chemical is maintained being held in the chemical pipe after the supply of the chemical to the ballast pipe is finished, there is a possibility that a sediment is generated due to degradation and deterioration of a chemical in the chemical pipe. Further, in the case where a chlorine-based chemical is used as a chemical, there is a possibility that a toxic substance such as a chlorine-based gas is generated due to the degradation and the deterioration of the chlorine-based chemical. In this respect, by shortening the length of the chemical pipe as described previously, a residual liquid amount of a chemical held in the chemical pipe can be reduced. Accordingly, the precipitation of a chemical and the generation of a toxic substance can be suppressed and hence, safety of the ballast water treatment device can be increased. With respect to the chemical pipe through which a chemical flows, a chemical of high concentration flows through the chemical pipe. Accordingly, it is necessary to form the chemical pipe using a material having higher corrosion resistance than materials for forming the ballast pipe and the bypass pipe. In this respect, by arranging the bypass pipe on a chemical holding part side as described above, a length of the chemical pipe can be shortened. Accordingly, a cost necessary for manufacturing the chemical pipe can be reduced.

In the above-mentioned configuration, at at least an inner surface of the bypass pipe is formed using a material having more excellent corrosion resistance than a material used for forming the ballast pipe.

With the above-mentioned configuration, even in the case where the concentration of a chemical in ballast water flowing through the bypass pipe becomes non-uniform to some extent, it is possible to suppress the occurrence of corrosion of the bypass pipe. By suppressing the occurrence of corrosion of the bypass pipe, it is possible to provide the ballast water treatment device having higher safety. Non-uniformity of concentration of a chemical in ballast water flowing through the ballast pipe is reduced compared to the prior art. Accordingly, even in the case where the ballast pipe is formed using substantially the same material as the prior art, the corrosion of the ballast pipe minimally occurs.

It is preferable that a surplus chemical which is not supplied to the ballast pipe after the supply of a chemical from the chemical holding part to the ballast pipe is finished be discharged to the outside rather than being held in the chemical holding part. However, in the case where a chemical is a chlorine-based chemical, for example, there may be a case where the direct discharge of a chemical of high concentration to the outside is not permitted by a law.

In view of the above, as the configuration for adjusting the concentration of a chemical to an extent that the discharging of the chemical is permitted by a law, it is preferable to adopt the following configuration. The chemical holding part of the ballast water treatment device is the sterilizing agent holding part in which a sterilizing agent is stored. The chemical pipe is the sterilization pipe which connects the sterilizing agent holding part and the bypass pipe to each other, and supplies the sterilizing agent from the sterilizing agent holding part to the bypass pipe. The ballast water treatment device includes the neutralizing agent holding part in which a neutralizing agent having a property of neutralizing the sterilizing agent is stored and the neutralization pipe which connects the neutralizing agent holding part and the bypass pipe to each other and supplies the neutralizing agent from the neutralizing agent holding part to the bypass pipe. The connecting portion between the neutralization pipe and the bypass pipe is positioned on an upstream side of the bypass pipe compared to the connecting portion between the sterilization pipe and the bypass pipe.

With the above-mentioned configuration, by making a sterilizing agent flow through the bypass pipe and, at the same time, by making a neutralizing agent flow through the bypass pipe, the sterilizing agent can be neutralized by the neutralizing agent. Accordingly, it is possible to discharge a sterilizing agent to the outside after the sterilizing agent is neutralized to a level that discharging of the sterilizing agent is permitted by a law. Further, a neutralizing agent is supplied to the bypass pipe at the position upstream of the position where sterilizing agent is supplied to the bypass pipe. Accordingly, even when the sterilizing agent of high concentration flows from the sterilization pipe into the bypass pipe, the sterilizing agent can be instantaneously neutralized by the neutralizing agent. As a result, it is possible to suppress the excessive increase of the concentration of a sterilizing agent flowing through the bypass pipe.

In the above-mentioned configuration, in the case where the bypass pipe is disposed above the ballast pipe in the vertical direction, it is difficult to make ballast water flowing through ballast pipe flow into the bypass pipe. Accordingly, in this case, it is preferable that the ballast water treatment device further have the ballast water take-in part which is mounted on the bypass pipe, and takes ballast water from the ballast pipe into the bypass pipe.

With the above-mentioned configuration, ballast water flowing through the bypass pipe is taken into the bypass pipe by the ballast water take-in part. Accordingly, a chemical supplied to the bypass pipe is is diluted by ballast water in the bypass pipe. Accordingly, the excessive increase of concentration of a chemical in ballast water flowing through the bypass pipe can be suppressed and hence, the occurrence of corrosion of the bypass pipe can be suppressed. By mounting the ballast water take-in part on the bypass pipe, it is also possible to acquire an advantageous effect that a flow rate of ballast water flowing through the bypass pipe can be set to a fixed value.

In the above-mentioned embodiment, it is preferable that the ballast water treatment device further have the concentration measuring part which is connected downstream of a merging portion between the ballast pipe and the bypass pipe, and measures the concentration of a chemical in ballast water flowing through the ballast pipe.

With the above-mentioned configuration, by measuring the concentration of a chemical in ballast water flowing through the ballast pipe after ballast water flowing through the ballast pipe and ballast water flowing through the bypass pipe merge with each other by the concentration measuring part, at the time of supplying ballast water to the ballast tank, the concentration of the chemical in ballast water supplied to the ballast tank can be known. On the other hand, at the time of discharging ballast water stored in the ballast tank to the outside of the ship, the concentration of a chemical in ballast water to be discharged to the outside of the ship can be known.

In the above-mentioned configuration, it is preferable that the ballast water treatment device further has the measurement bypass pipe which has both ends connected to the ballast pipe, the measurement bypass pipe being configured to allow a part of ballast water flowing through the ballast pipe to form a divided flow from the ballast pipe, and to allow the divided flow to be merged with the ballast pipe, and the concentration measuring part be provided on the measurement bypass pipe.

With the above-mentioned configuration, at the time of measuring the concentration of a chemical in ballast water flowing through the ballast pipe, ballast water which is an object to be measured can be sampled in such a manner that the ballast water is sampled from the measurement bypass pipe without directly sampling the ballast water from the ballast pipe. As a result, it is not always necessary to install the concentration measuring part in the vicinity of the ballast pipe. Accordingly, the measurement bypass pipe can be extended to the position where the installation of the concentration measuring part is desirable and hence, the degree of freedom in determining the position where the concentration measuring part is installed can be increased.

The ballast water treatment method according to the embodiment includes the step of allowing ballast water to flow through the ballast pipe connected to the ballast tank, the step of allowing a part of ballast water flowing through the ballast pipe to flow into the bypass pipe having both ends connected to the ballast pipe to form a divided flow, and allowing the divided flow to be merged with ballast pipe and the step of supplying a chemical from the chemical holding part in which the chemical is stored to the bypass pipe through the chemical pipe.

According to the above-mentioned water treatment method, a chemical held in the chemical holding part is once diluted by ballast water which is divided from ballast water flowing through the ballast pipe and flows through the bypass pipe and, thereafter, is supplied to the ballast pipe. Accordingly, it is possible to suppress the occurrence of non-uniformity in concentration of a chemical in ballast water flowing through the ballast pipe, compared to the case where a chemical is directly supplied to the ballast pipe without flowing through the bypass pipe.

It is preferable that the above-mentioned method further include the step of measuring the concentration of a chemical in ballast water flowing through the ballast pipe.

According to the above-mentioned method, at the time of supplying ballast water to the ballast tank, it is possible to know the concentration of a chemical in ballast water supplied to the ballast tank. On the other hand, at the time of discharging ballast water stored in the ballast tank to the outside of the ship, the concentration of a chemical in ballast water to be discharged to the outside of the ship can be known.

## Claims

1. A ballast water treatment device (1) comprising:
a bypass pipe (12) having both ends connected to a ballast pipe (11) which is connected to a ballast tank (10) and through which ballast water flows, the bypass pipe (12) being configured to allow a part of ballast water flowing through the ballast pipe (11) to form a divided flow from the ballast pipe (11) and to allow the divided flow to be merged with the ballast pipe (11);
a chemical holding part (30) in which a chemical is stored; and
a chemical pipe (14) configured to connect the chemical holding part (30) and the bypass pipe (12) with each other and supply the chemical from the chemical holding part (30) to the bypass pipe (12);
wherein the chemical holding part (30) is a sterilizing agent holding part (30) in which a sterilizing agent as the chemical is stored;
wherein the chemical pipe (14) is a sterilization pipe (14) which connects the sterilizing agent holding part (30) and the bypass pipe (12) with each other, and supplies the sterilizing agent from the sterilizing agent holding part (30) to the bypass pipe (12) such that the chemical held by the chemical holding part (30) is diluted once by ballast water which is divided from the ballast pipe (11) and flows through the bypass pipe (12), and thereafter is supplied to the ballast pipe (11); and
wherein the ballast water treatment device (1) further comprises:
a neutralizing agent holding part (40) in which a neutralizing agent having a property of neutralizing the sterilizing agent is stored; and
a neutralization pipe (15) which connects the neutralizing agent holding part (40) and the bypass pipe (12) with each other, and supplies the neutralizing agent from the neutralizing agent holding part (40) to the bypass pipe (12),
wherein a connecting portion between the neutralization pipe (15) and the bypass pipe (12) is positioned on an upstream side of the bypass pipe (12), compared to a connecting portion between the sterilization pipe (14) and the bypass pipe (12), and
wherein at least an inner surface of the bypass pipe (12) is formed using a material having more excellent corrosion resistance than a material used for forming the ballast pipe (11).

2. The ballast water treatment device (1) according to claim 1, further comprising a ballast water take-in part (P1) which is provided on the bypass pipe (12), for taking ballast water from the ballast pipe (11) into the bypass pipe (12).

3. The ballast water treatment device (1) according to claim 1, further comprising a measurement bypass pipe (13) having both ends connected to the ballast pipe (11), the measurement bypass pipe (13) being configured to allow a part of ballast water flowing through the ballast pipe (11) to form a divided flow from the ballast pipe (11) and to allow the divided flow to be merged with the ballast pipe (11),
wherein the concentration measuring part (60) is provided on the measurement bypass pipe (13).

4. A ballast water treatment method comprising:
a step of allowing ballast water to flow through a ballast pipe (11) connected to a ballast tank (10);
a step of allowing a part of ballast water flowing through the ballast pipe (11) to flow into a bypass pipe (12) having both ends connected to the ballast pipe (11) to form a divided flow, and allowing the divided flow to be merged with the ballast pipe (11); and
a step of supplying a chemical from a chemical holding part (30) in which the chemical is stored to the bypass pipe (12) through a chemical pipe (14), wherein the chemical held by the chemical holding part (30) is diluted once by ballast water which is divided from the ballast pipe (11) and flows through the bypass pipe (12), and thereafter is supplied to the ballast pipe (11);
wherein in the step of supplying the chemical, a sterilization agent and a neutralizing agent having a property of neutralizing the sterilizing agent are supplied to the bypass pipe (12), wherein the neutralizing agent is supplied to the bypass pipe (12) upstream of the position where the sterilizing agent is supplied to the bypass pipe (12), and wherein
at least an inner surface of the bypass pipe (12) is formed using a material having more excellent corrosion resistance than a material used for forming the ballast pipe (11).

## Patentansprüche

1. Ballastwasserbehandlungsvorrichtung (1), die aufweist:
eine Umgehungsleitung (12), deren beide Enden mit einer Ballastleitung (11) verbunden sind, die mit einem Ballasttank (10) verbunden ist und durch die Ballastwasser fließt, wobei die Umgehungsleitung (12) konfiguriert ist, es zu ermöglichen, dass ein Teil des durch die Ballastleitung (11) fließenden Ballastwassers einen abgetrennten Strom aus der Ballastleitung (11) bildet, und es zu ermöglichen, dass der abgetrennte Strom mit der Ballastleitung (11) zusammengeführt wird;
einen Chemikalienaufnahmeteil (30), in dem eine Chemikalie gespeichert ist; und
eine Chemikalienleitung (14), die konfiguriert ist, den Chemikalienaufnahmeteil (30) und die Umgehungsleitung (12) miteinander zu verbinden und die Chemikalie aus dem Chemikalienaufnahmeteil (30) der Umgehungsleitung (12) zuzuführen;
wobei der Chemikalienaufnahmeteil (30) ein Sterilisationsmittel-Aufnahmeteil (30) ist, in dem ein Sterilisationsmittel als die Chemikalie gelagert wird;
wobei die Chemikalienleitung (14) eine Sterilisationsleitung (14) ist, die den Sterilisationsmittel-Aufnahmeteil (30) und die Umgehungsleitung (12) miteinander verbindet und das Sterilisationsmittel von dem Sterilisationsmittel-Aufnahmeteil (30) der Umgehungsleitung (12) zuführt, so dass die von dem Chemikalienaufnahmeteil (30) aufgenommene Chemikalie einmal durch Ballastwasser verdünnt wird, das von der Ballastleitung (11) abgetrennt wird und durch die Umgehungsleitung (12) fließt, und
danach der Ballastleitung (11) zugeführt wird; und
wobei die Ballastwasserbehandlungsvorrichtung (1) ferner aufweist:
einen Neutralisationsmittel-Aufnahmeteil (40), in dem ein Neutralisationsmittel mit der Eigenschaft, das Sterilisationsmittel zu neutralisieren, gelagert wird; und
eine Neutralisationsleitung (15), die den Neutralisationsmittel-Aufnahmeteil (40) und die Umgehungsleitung (12) miteinander verbindet und das Neutralisationsmittel von dem Neutralisationsmittel-Aufnahmeteil (40) der Umgehungsleitung (12) zuführt, wobei ein Verbindungsabschnitt zwischen der Neutralisationsleitung (15) und der Umgehungsleitung (12) auf einer stromaufwärts gelegenen Seite der Umgehungsleitung (12) im Vergleich zu einem Verbindungsabschnitt zwischen der Sterilisationsleitung (14) und der Umgehungsleitung (12) angeordnet ist, und
wobei mindestens eine Innenfläche der Umgehungsleitung (12) unter Verwendung eines Materials mit einer besseren Korrosionsbeständigkeit als ein Material ausgebildet ist, das zur Bildung der Ballastleitung (11) verwendet wird.

2. Ballastwasserbehandlungsvorrichtung (1) nach Anspruch 1, die ferner einen Ballastwasser-Aufnahmeteil (P1) aufweist, der an der Umgehungsleitung (12) vorgesehen ist, um Ballastwasser von der Ballastleitung (11) in die Umgehungsleitung (12) aufzunehmen.

3. Ballastwasserbehandlungsvorrichtung (1) nach Anspruch 1, die ferner eine Mess-Umgehungsleitung (13) aufweist, deren beide Enden mit der Ballastleitung (11) verbunden sind, wobei die Mess-Umgehungsleitung (13) konfiguriert ist, es zu ermöglichen, dass ein Teil des durch die Ballastleitung (11) fließenden Ballastwassers einen abgetrennten Strom von der Ballastleitung (11) bildet, und es zu ermöglichen, dass der abgetrennte Strom mit der Ballastleitung (11) zusammengeführt werden kann, wobei der Konzentrationsmessteil (60) an der Mess-Umgehungsleitung (13) vorgesehen ist.

4. Ballastwasserbehandlungsverfahren, das aufweist:
einen Schritt des Ermöglichens, dass Ballastwasser durch eine Ballastleitung (11) fließt, die mit einem Ballasttank (10) verbunden ist;
einen Schritt, des Ermöglichens, dass ein Teil des Ballastwassers, das durch die Ballastleitung (11) fließt, in eine Umgehungsleitung (12) fließt, deren beide Enden mit der Ballastleitung (11) verbunden sind, um einen abgetrennten Strom zu bilden, und des Ermöglichens, dass der abgetrennte Strom mit der Ballastleitung (11) zusammengeführt wird; und
einen Schritt des Zuführens einer Chemikalie von einem Chemikalienaufnahmeteil (30), in dem die Chemikalie gespeichert ist, zu der Umgehungsleitung (12) durch eine Chemikalienleitung (14), wobei die Chemikalie, die von dem Chemikalienaufnahmeteil (30) aufgenommen wird, einmal durch Ballastwasser verdünnt wird, das von der Ballastleitung (11) abgetrennt wird und durch die Umgehungsleitung (12) fließt, und danach der Ballastleitung (11) zugeführt wird;
wobei in dem Schritt des Zuführens der Chemikalie ein Sterilisationsmittel und ein Neutralisationsmittel mit der Eigenschaft, das Sterilisationsmittel zu neutralisieren, der Umgehungsleitung (12) zugeführt werden, wobei das Neutralisationsmittel der Umgehungsleitung (12) stromaufwärts von der Position zugeführt wird, an der das Sterilisationsmittel der Umgehungsleitung (12) zugeführt wird, und wobei
mindestens eine Innenfläche der Umgehungsleitung (12) unter Verwendung eines Materials mit einer besseren Korrosionsbeständigkeit als ein Material ausgebildet ist, das zur Bildung der Ballastleitung (11) verwendet wird.

## Revendications

1. Dispositif de traitement d'eau de ballast (1), comprenant :
une conduite de dérivation (12) dont les deux extrémités sont reliées à une conduite de ballast (11) relié à un réservoir de ballast (10) et par laquelle s'écoule l'eau de ballast, ladite conduite de dérivation (12) étant prévue pour permettre à une partie de l'eau de ballast s'écoulant par la conduite de ballast (11) de former un flux divisé à partir de la conduite de ballast (11) et pour permettre au flux divisé d'être combiné à la conduite de ballast (11) ;
une partie de rétention de produit chimique (30) où est stocké un produit chimique ; et
une conduite de produit chimique (14) prévue pour relier la partie de rétention de produit chimique (30) à la conduite de dérivation (12) et pour refouler les produits chimiques de la partie de rétention de produit chimique (30) vers la conduite de dérivation (12) ;
où la partie de rétention de produit chimique (30) est une partie de rétention d'agent stérilisant (30) où est stocké un agent stérilisant en tant que produit chimique ;
où la conduite de produit chimique (14) est une conduite de stérilisation (14) qui relie la partie de rétention d'agent stérilisant (30) et la conduite de dérivation (12), et refoule l'agent stérilisant de la partie de rétention d'agent stérilisant (30) vers la conduite de dérivation (12), de sorte que le produit chimique stocké par la partie de rétention de produit chimique (30) est dilué une fois par l'eau de ballast divisée à partir de la conduite de ballast (11) et s'écoule par la conduite de dérivation (12), et est ensuite refoulé vers la conduite de ballast (11) ; et
où le dispositif de traitement d'eau de ballast (1) comprend en outre :
une partie de retenue d'agent neutralisant (40) où est stocké un agent neutralisant ayant la propriété de neutraliser l'agent stérilisant ; et
une conduite de neutralisation (15) reliant la partie de retenue d'agent neutralisant (40) à la conduite de dérivation (12), et refoulant l'agent neutralisant de la partie de retenue d'agent neutralisant (40) vers la conduite de dérivation (12),
une partie de connexion entre la conduite de neutralisation (15) et la conduite de dérivation (12) étant présentée en amont de la conduite de dérivation (12), par rapport à une partie de connexion entre la conduite de stérilisation (14) et la conduite de dérivation (12), et
au moins une surface intérieure de la conduite de dérivation (12) étant formée au moyen d'un matériau présentant une résistance à la corrosion supérieure à celle du matériau utilisé pour former la conduite de ballast (11).

2. Dispositif de traitement d'eau de ballast (1) selon la revendication 1, comprenant en outre une partie d'admission d'eau de ballast (P1) prévue sur la conduite de dérivation (12), pour admettre l'eau de ballast de la conduite de ballast (11) dans la conduite de dérivation (12).

3. Dispositif de traitement d'eau de ballast (1) selon la revendication 1, comprenant en outre une conduite de dérivation de mesure (13) dont les deux extrémités sont reliées à la conduite de ballast (11), ladite conduite de dérivation de mesure (13) étant prévue pour permettre à une partie de l'eau de ballast s'écoulant par la conduite de ballast (11) de former un flux divisé à partir de la conduite de ballast (11) et pour permettre au flux divisé d'être combiné à la conduite de ballast (11),
où la partie de mesure de concentration (60) est prévue sur la conduite de dérivation de mesure (13).

4. Procédé de traitement d'eau de ballast, comprenant :
une étape où l'eau de ballast est admise à s'écouler par une conduite de ballast (11) reliée à un réservoir de ballast (10) ;
une étape où une partie de l'eau de ballast s'écoulant dans la conduite de ballast (11) est admise à s'écouler dans une conduite de dérivation (12) dont les deux extrémités sont reliées à la conduite de ballast (11) pour former un flux divisé, et où le flux divisé est admis à être combiné à la conduite de ballast (11) ; et
une étape de refoulement d'un produit chimique à partir d'une partie de rétention de produit chimique (30) où le produit chimique est stocké vers la conduite de dérivation (12) par une conduite de produit chimique (14), le produit chimique stocké par la partie de rétention de produit chimique (30) étant dilué une fois par l'eau de ballast divisée à partir de la conduite de ballast (11) et s'écoulant par la conduite de dérivation (12), et étant refoulé ensuite vers la conduite de ballast (11) ;
où, lors de l'étape de refoulement du produit chimique, un agent de stérilisation et un agent de neutralisation ayant la propriété de neutraliser l'agent de stérilisation sont refoulés vers la conduite de dérivation (12), l'agent de neutralisation étant refoulé vers la conduite de dérivation (12) en amont de l'emplacement où l'agent de stérilisation est refoulé vers la conduite de dérivation (12), et où
au moins une surface intérieure de la conduite de dérivation (12) est formée au moyen d'un matériau présentant une résistance à la corrosion supérieure à celle du matériau utilisé pour former la conduite de ballast (11).
